# EUROPÄISCHE PATENTANMELDUNG

(11) **EP 1 037 449 A2**
(43) Veröffentlichungstag der Anmeldung: **20.09.2000**
(21) Anmeldenummer: 00105527.6
(22) Anmeldetag: 15.03.2000
(51) Int. Cl.: H04M 1/65, H04M 1/725

(54) **Telekommunikationsgerät mit Mitteln zur automatischen Entgegennahme von eingehenden Rufen**

(30) Priorität: 17.03.1999 DE 19911797
(71) Anmelder: ROBERT BOSCH GMBH, 70442 Stuttgart (DE)
(72) Erfinder: Nothdurft, Thomas, 90478 Nuernberg (DE); Pietriga, Marc, 38302 Wolfenbuettel (DE)

(57) **Zusammenfassung**

Es wird ein Telekommunikationsgerät (40), insbesondere Anrufbeantworter, mit mitteln zur automatischen Entgegennahme von eingehenden Rufen und mit einer Telekommunikationsschnittstelle (45) zum Anschluß an ein Telekommunikationsnetz (5) vorgeschlagen, das eine von dem Standort einer Anschlußschnittstelle (10) zu dem Telekommunikationsnetz (5) unabhängige Wahl des Standortes des Telekommunikationsgerätes (40) dadurch erlaubt, daß die Telekommunikationsschnittstelle (45) als drahtlose Telekommunikationsschnittstelle (45) ausgebildet ist.

## Beschreibung

### Stand der Technik

Die Erfindung geht aus von einem Telekommunikationsgerät nach der Gattung des Hauptanspruchs. Es sind allgemein Telekommunikationsgeräte, insbesondere Anrufbeantworter, mit Mitteln zur automatischen Entgegennahme von eingehenden Rufen bekannt, die mit einem Verbindungskabel direkt an das Telekommunikationsnetz angeschlossen sind.

### Vorteile der Erfindung

Das erfindungsgemäße Telekommunikationsgerät mit den Merkmalen des Hauptanspruchs hat demgegenüber den Vorteil, daß es möglich ist, das erfindungsgemäße Telekommunikationsgerät, insbesondere ein Anrufbeantworter, als Einzelgerät so in ein Telekommunikationssystem einzubinden, daß sein Standort weitgehend ortsunabhängig vom Standort der Schnittstelle zum Telekommunikationsnetz gewählt wird. Daraus resultiert eine hohe Flexibilität, die der Benutzer beim Aufstellen des erfindungsgemäßen Telekommunikationsgerätes erlangt.

Durch die in den Unteransprüchen aufgeführten Maßnahmen sind vorteilhafte Weiterbildungen und Verbesserungen des im Hauptanspruch angegebenen Telekommunikationsgerätes möglich.

Besonders vorteilhaft ist, daß das Telekommunikationsgerät einen ersten Speicher zur Aufzeichnung von ersten Daten, vorzugsweise in Sprachform und insbesondere als Ansage, umfaßt und daß das Telekommunikationsgerät eine Sendevorrichtung aufweist, wobei die Sendevorrichtung die ersten Daten bei einem eingehenden Ruf über die Telekommunikationsschnittstelle sendet. Dadurch besteht die Möglichkeit, daß erste Daten, die ein Benutzer insbesondere zur automatischen Entgegennahme von eingehenden Rufen als Ansage bei seiner Abwesenheit vorsieht, in dem Telekommunikationsgerät gespeichert werden, so daß dem Benutzer dadurch zusätzlicher Speicherplatz für erste Daten, insbesondere als Ansage, zur Verfügung steht.

Weiterhin ist von Vorteil, daß das Telekommunikationsgerät einen zweiten Speicher zur Aufzeichnung von zweiten Daten, die bei einem eingehenden Ruf von dem Telekommunikationsgerät über die Telekommunikationsschnittstelle empfangbar sind, umfaßt. Der zweite Speicher des Telekommunikationsgerätes trägt ebenso wie der erste Speicher zur Erhöhung der Speicherplatzkapazität bei, die der Benutzer insbesondere für zweite Daten beispielsweise als aufgezeichnete Nachricht eines rufenden Teilnehmers, bei einem eingehenden Ruf zur Verfügung hat.

Weiterhin ist von Vorteil, daß das Telekommunikationsgerät eine Fernabfrageeinrichtung aufweist, wobei die Fernabfrageeinrichtung auf eine Benutzeranforderung hin einen Auslesevorgang aktiviert und wobei die Fernabfrageeinrichtung die in dem ersten und/oder dem zweiten Speicher gespeicherten Daten über die Telekommunikationsschnittstelle zumindest teilweise ausliest. Dadurch ist es möglich, daß ein Benutzer über die Daten die im ersten und/oder zweiten Speicher gespeichert sind, beispielsweise mittels eines Zugangscodes, auch bei seiner Abwesenheit verfügt. An den im ersten Speicher gespeicherten ersten und/oder den im zweiten Speicher gespeicherten zweiten Daten sind Veränderungen und Ergänzungen vornehmbar.

Der erste Speicher zur Aufzeichnung von ersten Daten, der zweite Speicher zur Aufzeichnung von zweiten Daten und die Fernabfrageeinrichtung erlauben zusammen mit der freien Wahl des Standortes des Telekommunikationsgerätes bezüglich des Standortes der Schnittstelle zum Telekommunikationsnetz die folgenden weiteren Vorteile:
- die in dem ersten Speicher aufgezeichneten ersten Daten, insbesondere zur Ansage bei eingehenden Rufen, können vom Benutzer selbständig verwaltet werden und sind nur ihm bzw. mit seiner Kenntnis anderen Benutzern zugänglich,
- die im zweiten Speicher aufgezeichneten zweiten Daten, die insbesondere bei einem eingehenden Ruf über die Telekommunikationsschnittstelle empfangen werden, sind nur dem Benutzer zugänglich und
- die Fernabfrageeinrichtung im erfindungsgemäßen Telekommunikationsgerät ist ausschließlich dem Benutzer zugänglich.

Weiterhin ist es von Vorteil, daß die Telekommunikationsschnittstelle zum Betrieb gemäß einem Standard zur drahtlosen Kommunikation, vorzugsweise DECT-Standard, vorgesehen ist. Durch diesen Standard besteht die Möglichkeit, ein bestehendes Schnurlostelefonsystem ohne Änderung der zugrundeliegenden Systemkkonfiguration um einen schnurlosen Anrufbeantworter zu erweitern.

Weiterhin ist es von Vorteil, daß das Telekommunikationsgerät eine Stromversorgung umfaßt, vorzugsweise eine Batterie oder ein Akkumulator. Dadurch kann der Standort des erfindungsgemäßen Telekommunikationsgerätes nicht nur unabhängig vom Standort der Schnittstelle zum Telekommunikationsnetz, sondern auch unabhängig von einer Stromversorgung, beispielsweise einer Steckdose, gewählt werden.

Weiterhin ist es von Vorteil, daß die Stromversorgung über eine externe Stromquelle erfolgt. Dadurch ist eine Überprüfung des Ladungszustandes, beispielsweise einer Batterie oder eines Akkumulators, nicht erforderlich.

Weiterhin ist es von Vorteil, daß das Telekommunikationsgerät als tragbares Telekommunikationsgerät, vorzugsweise als Schnurlos- oder Mobiltelefon, ausgebildet ist. Dadurch kann der Standort des erfindungsgemäßen Telekommunikationsgerätes nicht nur einmal beim Aufstellen des Telekommunikationsgerätes gewählt werden, sondern der Standort des Telekommunikationsgerätes kann jederzeit verändert werden. Als Schnurlos- oder Mobiltelefon stellt das erfindungsgemäße Telekommunikationsgerät zusätzlich zu den erfindungsgemäßen Funktionsmöglichkeiten die Funktionsmöglichkeiten eines solchen Funktelefons bereit.

Weiterhin ist es von Vorteil, daß dem Telekommunikationsgerät eine eigene Rufnummer zugeordnet ist. Dadurch kann das Telekommunikationsgerät direkt über die Telekommunikationsschnittstelle, beispielsweise für die Hinterlassung einer Nachricht, angewählt werden.

Weiterhin ist es von Vorteil, daß das Telekommunikationsgerät einer Basisstation zugeordnet ist, wobei der Basisstation außerdem ein Telekommunikationsgerät zugeordnet ist, wobei ein eingehender Ruf von der Basisstation mit einer ersten Priorität dem Telekommunikationsendgerät zuleitbar ist und mit einem zweiten, von der ersten Priorität unterschiedlichen Priorität dem Telekommunikationsgerät zuleitbar ist. Dadurch ist es möglich, daß, beispielsweise in Abhängigkeit der Anwesenheit eines Benutzers, ein eingehender Ruf entweder zuerst dem der Basisstation zugeordneten Telekommunikationsendgerät und anschließend dem der Basisstation zugeordneten erfindungsgemäßen Telekommunikationsgerät oder umgekehrt zugeleitet wird.

### Zeichnung

Ausführungsbeispiele der Erfindung sind in der Zeichnung dargestellt und in der nachfolgenden Beschreibung näher erläutert. Es zeigen
- Figur 1: ein an ein Telekommunkikationsnetz angeschlossenes Telekommunikationssystem mit dem erfindungsgemäßen Telekommunikationsgerät,
- Figur 2: ein Telekommunikationssystem mit zwei erfindungsgemäßen Telekommunikationsgeräten und
- Figur 3: das erfindungsgemäße Telekommunikationsgerät.

### Beschreibung der Ausführungsbeispiele

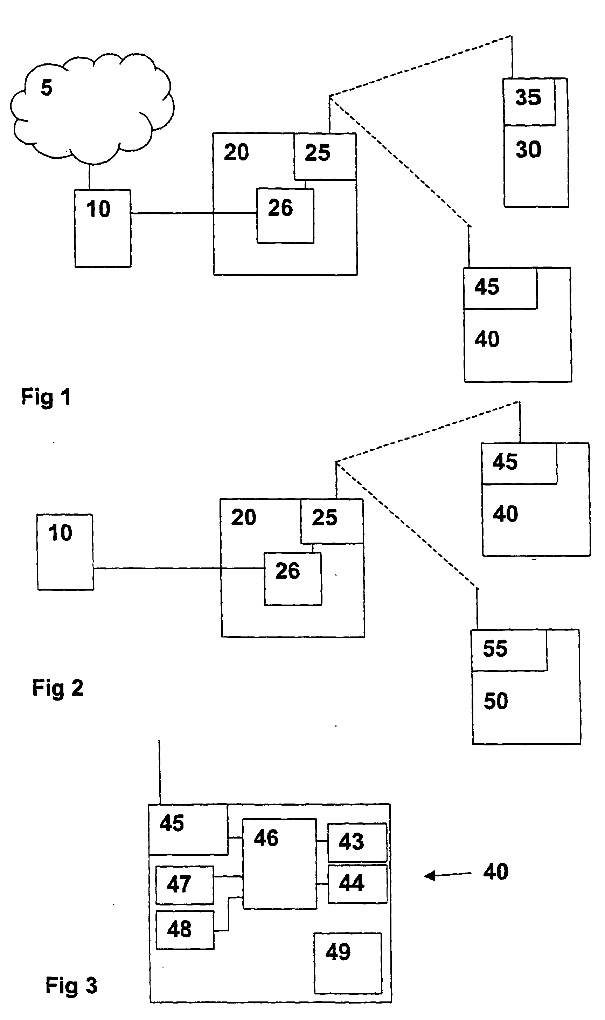

In Figur 1 ist beispielhaft der Aufbau eines Telekommunikationssystems, in das ein erfindungsgemäßes Telekommunikationsgerät 40 integriert ist, dargestellt. Das Telekommunikationssystem umfaßt im angegebenen Beispiel eine Anschlußschnittstelle 10 zu einem Telekommunikationsnetz 5, die mit einer Basisstation 20 drahtgebunden oder drahtlos verbunden ist. Weiterhin umfaßt das Telekommunikationssystem das erfindungsgemäße Telekommunikationsgerät 40 und ein Telekommunikationsendgerät 30, wobei das erfindungsgemäße Telekommunikationsgerät 40 und das Telekommunikationsendgerät 30 jeweils drahtlos mit der Basistation 20 verbunden sind. Die Anschlußschnittstelle 10 des Telekommunikationssystems ist mit dem Telekommunikationsnetz 5 verbunden, so daß sämtliche Komponenten des Telekommunikationssystems - im Beispiel die Basisstation 20, das erfindungegemäße Telekommunikationsgerät 40 und das Telekommunikationsendgerät 30 - mit externen Teilnehmern im Telekommunikationsnetz 5 über die Anschlußschnittstelle 10 kommunizieren können. Die Anschlußschnittstelle 10 zum Telekommunikationsnetz 5 ist in der Figur 1 getrennt von der Basistation dargestellt, kann aber ebenso auch in diese integriert sein.

Die, vorzugsweise drahtlosen, Verbindungen zwischen der Basisstation 20 und dem Telekommunikationsgerät 40 bzw. dem Telekommunikationsendgerät 30 werden erfindungsgemäß über Telekommunikationsschnittstellen in den jeweiligen Geräten realisiert. Hierzu umfaßt die Basisstation 20 eine erste Telekommunikationsschnittstelle 25, das Telekommunikationsenendgerät 30 umfaßt eine zweite Telekommunikationsschnittstelle 35 und das erfindungsgemäße Telekommunikationsgerät 40 umfaßt eine dritte Telekommunikationsschnittstelle 45. Die Verbindung sowohl zwischen der Basisstation 20 und dem erfindungsgemäßen Telekommunikationsgerät 40 als auch zwischen der Basisstation 20 und dem Telekommunikationsendgerät 30 sind unidirektional oder bidirektional, vorzugsweise jedoch bidirektional ausgelegt. Entsprechend sind die Telekommunikationsschnittstellen 25, 35, 45 vorzugsweise jeweils als Sende- und Empfangsschnittstellen ausgelegt. Die Basisstation 20 umfaßt zur Steuerung, insbesondere der ersten Telekommunikationsschnittstelle 25 eine erste Steuereinheit 26, die sowohl mit der ersten Telekommunikationsschnittstelle 25 als auch mit der Anschlußschnittstelle 10 verbunden ist. Das erfindungsgemäße Telekommunikationsgerät 40 umfaßt eine später zu beschreibende Steuereinheit, die die dritte Telekommunikationsschnittstelle 45 steuert. Analog dazu umfaßt das Telekommunikationsendgerät 30 eine nicht dargestellte Steuereinheit, die die zweite Telekommunikationsschnittstelle 35 steuert.

Die Verbindungen sowohl zwischen der Basisstation 20 und dem erfindungsgemäßen Telekommunikationsgerät 40 mittels der ersten Telekommunikationsschnittstelle 25 und der dritten Telekommunikationsschnittstelle 45 als auch zwischen der Basisstation 20 und dem Telekommunikationsendgerät 30 mittels der ersten Telekommunikationsschnittstelle 25 und der zweiten Telekommunikationsschnittstelle 35 funktionieren erfindungsgemäß insbesondere nach einem Standard zur drahtlosen Kommunikation. Die Telekommunikationsschnittstellen sind beispielsweise gemäß dem DECT-Standard, GSM-Standard oder UMTS-Standard ausgebildet. Insofern sind die Telekommunikationsschnittstellen 25, 35, 45 insbesondere gemäß eines solchen Standards vorgesehen bzw. sie werden von den jeweiligen Steuereinheiten gemäß eines solchen Standards gesteuert. Die erste Telekommunikationsschnittstelle 25 ist dabei gemäß der Schnittstellenspezifikation einer Basisstationsschnittstelle des Standards vorgesehen bzw. sie wird entsprechend gesteuert. Die zweite und dritte Telekommunikationsschnittstelle 35, 45 ist gemäß den Spezifikationen für eine Endgeräteschnittstelle des Telekommunikationsstandards vorgesehen bzw. sie wird entsprechend gesteuert. Erfindungsgemäß sind die Verbindungen zwischen der ersten Telekommunikationsschnittstelle 25 und der dritten Telekommunikationsschnittstelle 45 bzw. zwischen der ersten Telekommunikationsschnittstelle 25 und der zweiten Telekommunikationsschnittstelle 35 nicht notwendigerweise gemäß eines Standards zur drahtlosen Kommunikation vorgesehen, ihre Auslegung gemäß eines solchen Standards erlaubt es jedoch, Komponenten eines Telekommunikationssystems zu ersetzen oder hinzuzufügen, die sämtlich einem solchen Standard genügen.

In Figur 2 ist ein Telekommunikationssystem mit einer gegenüber der Figur 1 leicht veränderten Konfiguration dargestellt. Entsprechende Bezugszeichen aus der Figur 1 bezeichnen die gleichen Komponenten bzw. Teile von Komponenten des in Figur 1 dargestellten Telekommunikationssystems. In Figur 2 sind anstelle des Telekommunikationsendgerätes 30 und des Telekommunikationsgerätes 40 ein erstes Telekommunikationsgerät 40 und ein zweites Telekommunikationsgerät 50 vorgesehen. Das zweite Telekommunikationsgerät 50 umfaßt analog dem ersten Telekommunikationsgerät 40 eine vierte Telekommunikationsschnittstelle 55. Die dritte Telekommunikationsschnittstelle 45 des ersten Telekommunikationsgerätes 40 und die vierte Telekommunikationsschnittstelle des zweiten Telekommunikationsgerätes 50 sind identisch vorgesehen.Die erfindungsgemäßen Telekommunikationsgeräte 40, 50 sind somit in der Lage, über die dritte Telekommunikationsschnittstelle 45 bzw. über die vierte Telekommunikationsschnittstelle 55 mit der Basisstation 20 bzw. mit der ersten Telekommunikationsschnittstelle 25 genauso zu kommunizieren, wie das Telekommunikationsendgerät 30 über seine zweite Telekommunikationsschnittstelle 35 mit der Basisstation 20 kommunizieren kann. Erfindungsgemäß ist es durchaus möglich, daß das Telekommunikationssystem lediglich ein einziges erfindungsgemäßes Telekommunikationsgerät 40 zusammen mit einer Basisstation und einer Anschlußsschnittstelle 10 umfaßt. In der Regel werden jedoch Telekommunikationssysteme vorgesehen sein, die wenigstens ein erfindungsgemäßes Telekommunikationsgerät 40 und gleichzeitig wenigstens ein Telekommunikationsendgerät 30 zusammen mit einer Basisstation 20 und einer Anschlußsschnittstelle 10 umfassen, wobei umfangreichere Telekommunikationssysteme durchaus eine Mehrzahl sowohl von erfindungegemäßen Telekommunikationegeräten 40, 50 als auch eine Mehrzahl von Telekommunikationsendgeräten 30 zusammen mit wenigstens einer Basisstation 20 und wenigstens einer Anschlußschnittstelle 10 umfassen.

In Figur 3 ist das erfindungsgemäße Telekommunikationsgerät 40 durch ein detailliertes Blockschaltbild dargestellt. Das Telekommunikationsgerät 40 umfaßt die Telekommunikationsschnittstelle 45, die in den vorangehenden Figuren als dritte Telekommunikationsschnittstelle 45 bezeichnet wurde, um sie begrifflich von den Telekommunikationsschnittstellen 25, 35 der Basisstation 20 bzw. des Telekommunikationsendgerätes 30 zu unterscheiden. Das Telekommunikationsgerät 40 umfaßt außer der dritten Telekommunikationsschnittstelle 45 und der Steuereinheit 46 einen ersten Speicher 47 und einen zweiten Speicher 48, die beide jeweils mit der Steuereinheit 46 verbunden sind. Weiterhin umfaßt das Telekommunikationsgerät 40 eine Sendeeinrichtung 43 und eine Fernabfrageeinrichtung 44, die ebenfalls jeweils beide mit der Steuereinheit 46 verbunden sind. Weiterhin umfaßt das Telekommunikationsgerät 40 eine Stromversorgung 49, die mit den Einheiten bzw. Einrichtungen des Telekommunikationsgerätes 40 über nicht dargestellte Verbindungen verbunden ist. Die Stromversorgung 49 umfaßt erfindungsgemäß vorzugsweise eine zumindest zeitweise autarke Spannungsquelle, insbesondere eine Batterie, einen Akkumulator oder dergleichen. Alternativ oder in Kombination dazu umfaßt die Stromversorgung 49 erfindungsgemäß einen Anschluß an eine nicht dargestellte externe Strom- bzw. Spannungsquelle, insbesondere einen Netzspannungszugang eine Verbindung zu einem Photovoltaikmodul oder dergleichen. Somit kann die Stromversorgung 49 des erfindungsgemäßen Telekommunikationsgerätes 40 zum einen drahtgebunden, insbesondere mittels eines Netzsteckers zu einer Steckdose, oder drahtlos, insbesondere mittels einer Batterie oder eines Akkumulators, vorgesehen sein.

Erfindungsgemäß funktioniert das Telekommunikationsgerät 40 analog einem Anrufbeantworter, der erfindungsgemäß als schnurloser Anrufbeantworter in ein Telekommunikationssystem integriert ist. Bei einem eingehenden Ruf, der für das Telekommunikationsgerät 40 bestimmt ist, werden durch die dritte Telekommunikationsschnittstelle 45 Signale empfangen, die Signale werden von der Steuereinheit 46 als eingehenden Ruf erkannt und eine Reaktion des erfindungsgemäßen Telekommunikationsgerätes 40 gemäß benutzerdefinierten Einstellungen wird ausgelöst. Die Reaktionsmöglichkeiten des erfindungsgemäßen Telekommunikationsgerätes 40 auf einen als solchen erkannten eingehenden Ruf umfassen insbesondere das Auslesen von ersten Daten, die in dem ersten Speicher 47 gespeichert sind, und die Übertragung der ersten Daten über die Telekommunikationsschnittstelle 45 an den Teilnehmer, der den eingehenden Ruf ausgelöst hat. Bei der Übertragung der ersten Daten durch die dritte Telekommunikationsschnittstelle 45 wird von der Steuereinheit 46 die Sendevorrichtung 43 aktiviert, die die ersten Daten, insbesondere gemäß einem Standard zur drahtlosen Kommunikation, zur Aussendung vorbereitet. Die ersten Daten umfassen hierbei insbesondere eine Ansage in Sprachform, jedoch können die ersten Daten ebenso auch Text- oder Bilddaten umfassen, die von der Sendevorrichtung 43 zur Übertragung entsprechend aufbereitet werden. Die ersten Daten können in dem ersten Speicher 47 sowohl in analoger Form, insbesondere mittels eines Bandlaufwerks, oder in digitaler Form, beispielsweise mittels eines digitalen Sprachspeichers, eines digitalen Bandlaufwerks oder dergleichen, gespeichert sein.

In Abhängigkeit der ersten Daten kann benutzerdefiniert als weitere Reaktionsmöglichkeiten des erfindungsgemäßen Telekommunikationsgerätes 40 auf einen eingehenden Ruf die Steuereinheit 46 zumindest zeitweise in einen Wartemodus übergehen, so daß mittels der dritten Telekommunikationsschnittstelle 45 Daten empfangbar sind, die als zweite Daten in dem zweiten Speicher 48 in analoger oder digitaler Form speicherbar sind. Die Realisierungsmöglichkeiten des zweiten Speichers 48 umfassen erfindungsgemäß sämtliche bei dem ersten Speicher 47 erwähnten Realisierungsmöglichkeiten. Zudem können der erste Speicher 47 und der zweite Speicher 48 zusammengefaßt sein, insbesondere in einem Bauelement oder einer Baugruppe. Hierbei kann eine Speicheraufteilung und insbesondere die Abgrenzung eines Speicherbereichs für den ersten Speicher 47 von einem Speicherbereich für den zweiten Speicher 48 vorgesehen sein, wobei die Speicheraufteilung sowohl starr als auch variabel, insbesondere in Abhängigkeit der benutzerdefinierten Einstellungen und Reaktionsweisen des erfindungsgemäßen Telekommunikationsgerätes 40, vorsehbar ist. Die zweiten Daten dienen erfindungsgemäß insbesondere der Information des Benutzers des erfindungsgemäßen Telekommunikationsgerätes 40 mittels Sprach-, Text- oder Bilddaten durch den Teilnehmer, der den eingehenden Ruf ausgelöst hat. Der Benutzer des erfindungsgemäßen Telekommunikationsgerätes 40 kann beispielsweise im Anschluß an seine Abwesenheit die gespeicherten zweiten Daten abfragen, indem er durch nicht dargestellte Bedienelemente die Steuervorrichtung 46 veranlaßt, die im zweiten Speicher 48 gespeicherten zweiten Daten über nicht dargestellte Wiedergabeeinrichtungen, insbesondere Lautsprecher für zweite Daten in Form von Sprachdaten, Display oder Bildschirm, für zweite Daten in Form von Text- und/oder Bilddaten, auszugeben.

Mittels der Fernabfrageeinrichtung ist es dem Benutzer des erfindungsgemäßen Telekommunikationsgerätes 40 ebenso möglich, über die Basisstation ein Signal an die dritte Telekommunikationsschnittstelle 45 des erfindungsgemäßen Telekommunikationsgerätes 40 zu senden, das von der Steuervorrichtung 46 erkannt wird und das die Fernabfrageeinrichtung 44 derart aktiviert, daß beispielsweise zweite Daten vom zweiten Speicher 48 ausgelesen werden und über die dritte Telekommunikationsschnittstelle 45 zum Benutzer des erfindungsgemäßen Telekommunikationsgerätes 40 gesendet werden. Diesen Vorgang kann der Benutzer beispielsweise über die Basisstation auslösen, d.h. von einem an die Bassistation angeschlossenen Gerät, insbesondere Telekommunikationsendgerät. Weiterhin kann der Benutzer den beschriebenen Vorgang auch über das Telekommunikationsnetz 5, die Anschlußschnittstelle 10 und die Bassistation 20 auslösen, d.h. von einem Telekommunikationsendgerät im Telekommunikationsnetz 5. Hierbei ist beispielsweise die Verwendung eines Codes, insbesondere Zahlencodes oder dergleichen zur Authentifizierung des Benutzers vorsehbar, so daß die zweiten Daten ausschließlich dann über die Telekommunikationsschnittstelle 45 übertragen werden, wenn der Benutzer des erfindungsgemäßen Telekommunikationsgerätes 40 als berechtigter Benutzer erkannt ist. Eine solche Authentifizierung des Benutzers kann selbstverständlich ebenfalls vorgesehen sein, wenn die zweiten Daten aus dem zweiten Speicher 48 lediglich über die nicht dargestellten Wiedergabeeinrichtungen an den Benutzer ausgelesen werden.

Zur Aufzeichnung von ersten Daten, die im ersten Speicher 47 gespeichert werden, sieht das erfindungsgemäße Telekommunikationsgerät 40 die nicht dargestellten Eingabevorrichtungen insbesondere derart vor, daß das erfindungsgemäße Telekommunikationsgerät 40 durch Aktivierung der Steuereinheit 46 durch die Eingabeeinrichtungen in einen Aufnahmemodus übergeht, so daß über die Eingabevorrichtungen, die insbesondere ein Mikrofon umfassen, Sprachdaten, Textdaten und/oder Bilddaten eingebbar und in dem ersten Speicher 47 auf zeichenbar sind. Bei der Ausbildung des erfindungsgemäßen Telekommunikationsgerätes 40 als tragbares Telekommunikationsgerät, vorzugsweise als Schnurlos- oder Mobiltelefon, können vorhandene Eingabe- und Wiedergabeeinrichtungen vorteilhaft für die Aufzeichnung der ersten Daten und die Wiedergabe der zweiten Daten verwendet werden. Ebenso wie die zweiten Daten mittels der Fernabfrageeinrichtung 44 über die Telekommunikationsschnittstelle 45, beispielsweise zum Abhören der zweiten Daten durch den Benutzer, gesendet werden können, können auch die ersten Daten statt über die Eingabevorrichtungen über die Telekommunikationsschnittstelle 45 vom Telekommunikationsendgerät 40 empfangen und in dem ersten Speicher 47 aufgezeichnet werden.

Erfindungsgemäß wird für das Telekommunikationsgerät 40 ein Standort im Sende- und Empfangsbereich der Basisstation 20 gewählt. Der Standort des Telekommunikationsgerätes 40 ist somit unabhängig vom Standort der Anschlußschnittstelle 10 zum Telekommunikationsnetz 5. Für den Fall, daß die Stromversorgung 49 des erfindungsgemäßen Telekommunikationsgerätes 40 drahtlos ausgebildet ist, kann der Standort des Telekommunikationsgerätes 40 vollständig unabhängig gewählt werden und für den Fall, daß die Stromversorgung 49 drahtgebunden ausgebildet ist, ist für die Wahl des Standortes des Telekommunikationsgerätes 40 lediglich auf das Vorhandensein einer entsprechenden Spannungsquelle für die Stromversorgung 49 zu achten. Das Telekommunikationsgerät 40 kann somit tragbar ausgeführt sein und innerhalb des Sende- und Empfangsbereichs der Basisstation frei bewegt werden. Wenn die drahtlose Verbindung zwischen dem Telekommunikationsgerät 40 und der Schnittstelle 20 so ausgebildet ist, daß das Telekommunikationsgerät 40 auch in dem Sende- und Empfangsbereich einer weiteren Basisstation 20 funktioniert, kann das Telekommunikationsgerät 40 ebensogut in dem gesamten Sende- und Empfangsbereich der betroffenen Basisstationen bewegt werden. Sowohl mit einer einzigen Basisstation 20, als auch mit mehreren Basisstationen 20 resultiert für die Aufstellung des Telekommunikationsgerätes 40 erfindungsgemäß eine hohe Flexibilität. Insbesondere ist die Funktion eines Anrufbeantwortes, die das Telekommunikationsgerät 40 ausfüllt, nicht an den Standort der Basisstation 20 gebunden. Bei der Zuordnung des erfindungsgemäßen Telekommunikationsgerätes 40 zu einem Benutzer kann dieser somit davon ausgehen, daß seine im ersten Speicher 47 und/oder im zweiten Speicher 48 des Telekommunikationsgerätes 40 gespeicherten Daten lediglich dort zugänglich sind. Mehreren Benutzern im Bereich einer Basisstation 20 können auch mehrere Telekommunikationsgeräte 40, 50 zugeordnet sein, so daß je einem Benutzer ein Telekommunikationsgerät 40, 50 zugeordnet ist. Wenn die Basisstation 20, beispielsweise als DECT-Basisstation ausgebildet, über das Leistungsmerkmal "Durchwahl" verfügt, können die mehreren Telekommunikationsgeräte 40, 50 gezielt angewählt werden, so daß ein anrufender Teilnehmer einer bestimmten Person gezielt eine Nachricht hinterlassen kann, was durch die Zuordnung einer eigenen Rufnummer zu dem Telekommunikationsgerät 40, 50 erreicht wird. Weiterhin kann der Benutzer oder die Benutzer einer Basisstation dieselbe beispielsweise so konfigurieren, daß beim Vorhandensein eines erfindungsgemäßen Telekommunikationsgerätes 40 und eines Telekommunikationsendgerätes 30 im Sende- und Empfangsbereich der Basisstation 20 eine unterschiedliche Priorisierung der der Basisstation zugeordneten Geräte in Abhängigkeit beispielsweise der Anwesenheit oder der Abwesenheit des oder der Benutzer einstellbar ist. Im Falle der Abwesenheit des Benutzers kann ein eingehender Ruf von der Basisstation 20 beispielsweise mit einer höheren Priorität dem erfindungsgemäßen Telekommunikationsgerät 40 und mit einer niedrigeren Priorität dem Telekommunikationsendgerät 30 zugeleitet werden, so daß der eingehende Ruf von dem Telekommunikationsgerät 40 entgegengenommen wird. Bei Anwesenheit des Benutzers oder der Benutzer kann beispielsweise die Prioritätsreihenfolge zwischen dem erfindungsgemäßen Telekommunikationsgerät 40 und dem Telekommunikationsendgerät 30 vertauscht werden, so daß eingehende Rufe möglichst von dem Benutzer oder den Benutzern persönlich entgegengenommen werden.

Gegenüber der Funktion eines Anrufbeantworters in der Basisstation 20 bietet das erfindungsgemäße Telekommunikationsgerät den Vorteil, daß der Benutzer die starre Bindung zwischen der Basisstation 20 und der Funktionalität eines Anrufbeantworters erfindungsgemäß trennen kann. Insbesondere bei der Verwendung einer standardisierten Luftschnittstelle, wie beispielsweise DECT, besteht die Möglichkeit, das erfindungsgemäße Telekommunikationsgerät 40 unabhängig von der Basisstation zu erwerben und in ein bestehendes Telekommunikationssystem zu integrieren. Alle Vermittlungsfunktionen, die in einem solchen System exisitieren, können für die Kommunikation mit dem Anrufbeantworter bzw. dem Telekommunikationsgerät verwendet werden. Das erfindungsgemäße Telekommunikationsgerät kann anstelle oder zusätzlich zu anderen Telekommunikationsendgeräten 30 bzw. zu anderen Sprecheinrichtungen, einer Basisstation 20 zugeordnet werden. Dabei wird das gleiche Verfahren verwendet, wie für die Telekommunikationsendgeräte 30 bzw. die Sprecheinrichtungen. Somit ist der Anrufbeantworter bzw. das erfindungegemäße Telekommunikationagerät 40 aus Sicht der Basisstation 20 nicht von einer Sprecheinrichtung bzw. Telekommunikationsendgerät 30 zu unterscheiden, da die gleiche Schnittstelle zur Basisstation verwendet wird.

## Patentansprüche

1. Telekommunikationsgerät (40), insbesondere Anrufbeantworter, mit Mitteln zur automatischen Entgegennahme von eingehenden Rufen und mit einer Telekommunikationsschnittstelle (45) zum Anschluß an ein Telekommunikationsnetz (5), dadurch gekennzeichnet, daß die Telekommunikationsschnittstelle (45) als drahtlose Telekommunikationsschnittstelle (45) ausgebildet ist.

2. Telekommunikationsgerät (40) nach Anspruch 1, dadurch gekennzeichnet, daß das Telekommunikationsgerät (40) einen ersten Speicher (47) zur Aufzeichnung von ersten Daten, vorzugsweise in Sprachform und insbesondere als Ansage, umfaßt und daß das Telekommunikationsgerät (40) eine Sendevorrichtung (43) aufweist, wobei die Sendevorrichtung die ersten Daten bei einem eingehenden Ruf über die Telekommunikationsschnittstelle (45) sendet.

3. Telekommunikationsgerät (40) nach Anspruch 1 oder 2, dadurch gekennzeichnet, daß das Telekommunikationsgerät (40) einen zweiten Speicher (48) zur Aufzeichnung von zweiten Daten, die bei einem eingehenden Ruf von dem Telekommunikationsgerät (40) über die Telekommunikationsschnittstelle (45) empfangbar sind, umfaßt.

4. Telekommunikationsgerät nach Anspruch 2 oder 3, dadurch gekennzeichnet, daß das Telekommunikationsgerät eine Fernabfrageeinrichtung (44) aufweist, wobei die Fernabfrageeinrichtung (44) auf eine Benutzeranforderung hin einen Auslesevorgang aktiviert und wobei die Fernabfrageeinrichtung (44) die in dem ersten Speicher (47) und/oder dem zweiten Speicher (48) gespeicherten Daten über die Telekommunikationsschnittstelle (45) zumindest teilweise ausliest.

5. Telekommunikationsgerät (40) nach einem der vorhergehenden Ansprüche, dadurch gekennzeichnet, daß die Telekommunikationsschnittstelle (45) zum Betrieb gemäß einem Standard zur drahtlosen Kommunikation, vorzugsweise DECT-Standard, vorgesehen ist.

6. Telekommunikationsgerät (40) nach einem der vorhergehenden Ansprüche, dadurch gekennzeichnet, daß das Telekommunikationsgerät (40) eine Stromversorgung (49) umfaßt, vorzugsweise eine Batterie oder einen Akkumulator.

7. Telekommunikationsgerät (40) nach Anspruch 7, dadurch gekennzeichnet, daß die Stromversorgung (49) über eine externe Stromquelle erfolgt.

8. Telekommunikationsgerät (40) nach einem der vorhergehenden Ansprüche, dadurch gekennzeichnet, daß das Telekommunikationsgerät (40) als tragbares Telekommunikationsgerät (40), vorzugsweise als Schnurlos- oder Mobiltelefon, ausgebildet ist.

9. Telekommunikationsgerät (40) nach einem der vorhergehenden Ansprüche, dadurch gekennzeichnet, daß dem Telekommunikationsgerät (40) eine eigene Rufnummer zugeordnet ist.

10. Telekommunikationsgerät (40) nach einem der vorhergehenden Ansprüche, dadurch gekennzeichnet, daß das Telekommunikationsgerät (40) einer Basisstation (20) zugeordnet ist, wobei der Basisstation (20) außerdem ein Telekommunikationsendgerät (30) zugeordnet ist, wobei ein eingehender Ruf von der Basisstation (20) mit einer ersten Priorität dem Telekommunikationsendgerät (30) zuleitbar ist und mit einer zweiten, von der ersten Priorität unterschiedlichen Priorität dem Telekommunikationsgerät (40) zuleitbar ist.
